# EUROPEAN PATENT APPLICATION

(11) **EP 4 336 328 A1**
(43) Date of publication of application: **13.03.2024**
(21) Application number: 22815019.9
(22) Date of filing: 16.05.2022
(51) Int. Cl.: G06F 3/0481, G06F 3/0484, G06F 3/0487, G06F 9/451

(54) **WINDOW DISPLAY METHOD AND ELECTRONIC DEVICE**

(30) Priority: 31.05.2021 CN 202110604331
(71) Applicant: Huawei Technologies Co., Ltd., Shenzhen, Guangdong 518129 (CN)
(72) Inventor: ZHU, Pei, Shenzhen, Guangdong 518129 (CN); WANG, Bo, Shenzhen, Guangdong 518129 (CN); RUI, Jiang, Shenzhen, Guangdong 518129 (CN); LIU, Bin, Shenzhen, Guangdong 518129 (CN); CHEN, Guangjun, Shenzhen, Guangdong 518129 (CN)
(74) Representative: Gill Jennings & Every LLP
(86) International application number: PCT/CN2022/093065
(87) International publication number: WO 2022/252972

(57) **Abstract**

This application provides a window display method and an electronic device. The window display method includes: The electronic device displays a first window and a second window, where a screen direction of the electronic device is a first direction; the screen direction is one of a portrait direction, a landscape direction, a reverse portrait direction, and a reverse landscape direction; and a display direction of the first window is the first direction. When detecting that the screen direction of the electronic device changes from the first direction to a second direction, the electronic device keeps a display direction of the second window unchanged, and rotates the first window, so that the display direction of the first window is the second direction.

## Description

This application claims priority to Chinese Patent Application No. 202110604331.6, filed with the China National Intellectual Property Administration on May 31, 2021 and entitled "WINDOW DISPLAY METHOD AND ELECTRONIC DEVICE", which is incorporated herein by reference in its entirety.

### TECHNICAL FIELD

This application relates to the field of terminal technologies, and in particular, to a window display method and an electronic device.

### BACKGROUND

Currently, mobile devices are becoming more diversified in form and larger in size, and scenarios of multi-tasking and multi-window running are becoming increasingly abundant. To meet a requirement of a user, more electronic devices support displaying one or more other application interfaces in a form of a floating window or a split-screen window while displaying a display interface of one application window.

However, in the conventional technology, a floating window or a split-screen window usually cannot rotate freely, affecting user experience.

### SUMMARY

According to a first aspect, this application provides a window display method, applied to an electronic device and including:
the electronic device displays a first window and a second window, where a screen direction of the electronic device is a first direction; the screen direction is one of a portrait direction, a landscape direction, a reverse portrait direction, and a reverse landscape direction; and a display direction of the first window is the first direction; and
when detecting that the screen direction of the electronic device changes from the first direction to a second direction, the electronic device keeps a display direction of the second window unchanged, and rotates the first window, so that the display direction of the first window is the second direction. According to the method shown in this application, the first window may be freely rotated.

In an embodiment of this application, the first window is a floating window. In this embodiment, when the first window is the floating window, the electronic device may rotate a display direction of the floating window according to the screen direction of the electronic device when the screen direction of the electronic device changes.

In an embodiment of this application, the second window is a full-screen window, or the second window and a third window displayed by the electronic device are displayed on split screens. In this embodiment, when the second window is the full-screen window, and the screen direction of the electronic device changes, a display direction of the full-screen window may remain unchanged, and the first window may rotate on the full-screen window. Alternatively, when the second window is a split-screen window displayed on split screens with the third window, and the screen direction of the electronic device changes, a display direction of the split-screen window may remain unchanged, and the first window may rotate on the split-screen window.

In an embodiment of this application, the rotating the first window includes: rotating the first window when determining that the first window meets a preset condition. In this embodiment, the electronic device may determine, based on the preset condition set by a user, whether to rotate the first window, to improve user experience.

In an embodiment of this application, the first window includes a first control, the first control includes a closed state and an open state, and the determining that the first window meets a preset condition includes: determining that the first control is in the open state, where the open state indicates that the first window supports displaying based on the screen direction of the electronic device. In this embodiment, the preset condition is a setting of the first control by the user, and the first control may be located on the first window, to facilitate an operation by the user.

In an embodiment of this application, the method further includes: after rotating the first window, adjusting a size of the first window. In this embodiment, the electronic device may adjust the size of the first window based on a size of the second window or the size of the first window of the electronic device, so that the user can view and operate content of the first window.

In an embodiment of this application, the first window and the second window are windows of different applications.

According to a second aspect, this application provides a window display method, applied to an electronic device and including:
the electronic device displays a first window, where a screen direction of the electronic device is a first direction; the screen direction is one of a portrait direction, a landscape direction, a reverse portrait direction, and a reverse landscape direction; and a display direction of the first window is the first direction; and
when opening a second window and displaying the second window in a preset display direction of the second window, the electronic device keeps the display direction of the first window unchanged, where the preset display direction of the second window is different from the first direction, and the second window is a non-floating window. According to the method shown in this application, when the electronic device opens the second window, the display direction of the first window may be determined based on the screen direction of the electronic device, and may be irrelevant to a display direction of the second window. That is, the electronic device may enable the display direction of the first window to be different from the display direction of the second window.

In an embodiment of this application, the second window is a full-screen window, or the second window is a split-screen window displayed on split screens with the first window and/or a third window. In this embodiment, the second window is the full-screen window. When the electronic device opens the full-screen window, the first window may still keep consistent with the screen direction of the electronic device, and the display direction of the first window is not adjusted based on the full-screen window. Alternatively, the second window is the split-screen window displayed on split-screens with the first window and/or the third window. In this way, when the split-screen window is opened, the first window may still keep consistent with the screen direction of the electronic device, and the display direction of the first window is not adjusted based on the split-screen window.

In an embodiment of this application, the first window is a floating window. In this embodiment, the first window is the floating window. When the second window is opened, regardless of whether the second window is the full-screen window or the split-screen window, a display direction of the floating window may not be adjusted based on a display direction of the second window, and the floating window may still keep consistent with the screen direction of the electronic device.

In an embodiment of this application, the keeping the display direction of the first window unchanged includes: keeping the display direction of the first window unchanged when determining that the first window meets a preset condition. In this embodiment, the electronic device may determine, based on the preset condition set by a user, whether to keep the display direction of the first window unchanged, to improve user experience.

In an embodiment of this application, the first window includes a first control, the first control includes a closed state and an open state, and the determining that the first window meets a preset condition includes: determining that the first control is in the open state, where the open state indicates that the first window is displayed based on the screen direction of the electronic device. In this embodiment, the preset condition may be a setting of the first control by the user, and the first control may be located on the first window, to facilitate an operation by the user.

In an embodiment of this application, the first window and the second window are windows of different applications. In this embodiment, the first window and the second window are windows of different applications. When using a plurality of applications, the user may freely rotate a window of one of the applications based on a requirement.

According to a third aspect, this application provides an electronic device, including a processor and a storage device. The storage device stores program instructions, and when the program instructions are run by the processor, the electronic device is enabled to perform the window display method shown in the first aspect.

According to a fourth aspect, this application provides an electronic device, including a processor and a storage device. The storage device stores program instructions, and when the program instructions are run by the processor, the electronic device is enabled to perform the window display method shown in the second aspect.

According to a fifth aspect, this application provides a computer-readable storage medium, including computer instructions. When the computer instructions are run on an electronic device, the electronic device is enabled to perform the window display method shown in the first aspect.

According to a sixth aspect, this application provides a computer-readable storage medium, including computer instructions. When the computer instructions are run on an electronic device, the electronic device is enabled to perform the window display method shown in the second aspect.

Based on the method shown in this application, the floating window may be freely rotated.

### BRIEF DESCRIPTION OF DRAWINGS

FIG. 1 is a schematic diagram of a structure of an electronic device 100 according to an embodiment of the present invention;
FIG. 2 is a block diagram of a software structure of an electronic device 100 according to an embodiment of the present invention;
FIG. 3 is a schematic diagram of a working mechanism of a window manager in FIG. 2;
FIG. 4A and FIG. 4B are schematic diagrams of a working mechanism of the window manager in FIG. 2;
FIG. 5A to FIG. 5D are schematic diagrams of a screen direction and an application display direction of an electronic device 100;
FIG. 6A and FIG. 6B are graphical interfaces of an electronic device 100 in the conventional technology;
FIG. 7A and FIG. 7B are schematic diagrams of a graphical interface of a window display method according to an embodiment of this application;
FIG. 8A and FIG. 8B are schematic diagrams of a graphical interface of a window display method according to an embodiment of this application;
FIG. 9A and FIG. 9B are schematic diagrams of a graphical interface of a window display method according to an embodiment of this application;
FIG. 10A and FIG. 10B are schematic diagrams of a graphical interface of a window display method according to an embodiment of this application;
FIG. 11 is a flowchart of a window display method according to an embodiment of this application.
FIG. 12A and FIG. 12B are schematic diagrams of a graphical interface of a window display method according to an embodiment of this application;
FIG. 13A and FIG. 13B are schematic diagrams of a graphical interface of a window display method according to an embodiment of this application;
FIG. 14A and FIG. 14B are schematic diagrams of a graphical interface of a window display method according to an embodiment of this application;
FIG. 15A and FIG. 15B are schematic diagrams of a graphical interface of a window display method according to an embodiment of this application;
FIG. 16 is a flowchart of a window display method according to an embodiment of this application;
FIG. 17 is a schematic diagram of a structure of a window display apparatus according to an embodiment of this application; and
FIG. 18 is a schematic diagram of a structure of a window display apparatus according to another embodiment of this application.

### DESCRIPTION OF EMBODIMENTS

The following describes technical solutions in embodiments of this application with reference to accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In descriptions of embodiments of this application, unless otherwise stated, "a plurality of" means two or more than two.

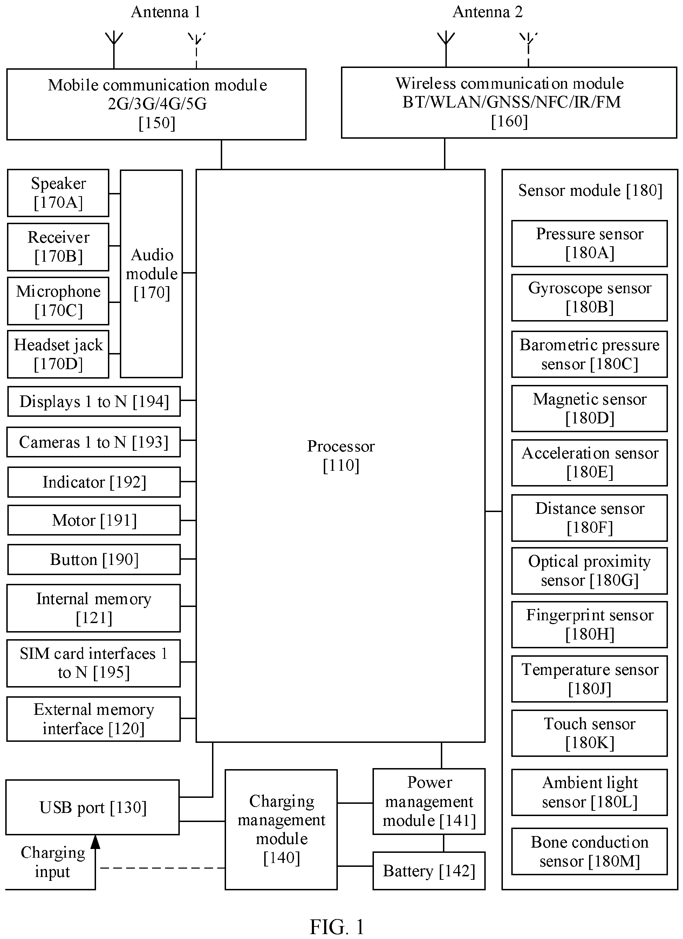

FIG. 1 is a schematic diagram of a structure of an electronic device 100.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that have been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-wire synchronization serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-wire communication bus. The bus converts data to be transmitted between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a shooting function of the electronic device 100. The processor 110 communicates with the display 194 through the DSI, to implement a display function of the electronic device 100.

The GPIO interface may be configured by using software. The GPIO interface may be configured as a control signal, or may be configured as a data signal. In some embodiments, the GPIO interface may be configured to connect the processor 110 to the camera 193, the display 194, the wireless communication module 160, the audio module 170, the sensor module 180, or the like. The GPIO interface may be further configured as the I2C interface, the I2S interface, the UART interface, the MIPI interface, or the like.

The USB port 130 is a port that conforms to a USB standard specification, and may be specifically a mini-USB port, a micro-USB port, a USB type-C port, or the like. The USB port 130 may be configured to connect to a charger to charge the electronic device 100, or may be configured to transmit data between the electronic device 100 and a peripheral device, or may be configured to connect to a headset, to play audio by using the headset. The port may be further configured to connect to another electronic device, for example, an AR device.

It may be understood that an interface connection relationship between the modules illustrated in this embodiment of the present invention is merely an example for description, and constitutes no limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input from a wired charger through the USB port 130. In some embodiments of wireless charging, the charging management module 140 may receive a wireless charging input through a wireless charging coil of the electronic device 100. The charging management module 140 may further supply power to the electronic device by using the power management module 141 while charging the battery 142.

The power management module 141 is configured to connect the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transmits a processed signal to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in the same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, to execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a shooting function through the ISP, the camera 193, the video codec, the GPU, the display 194, the application processor, and the like.

The ISP is configured to process data fed back by the camera 193. For example, during shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a shooting scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform or the like on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100, for example, image recognition, facial recognition, speech recognition, and text understanding, may be implemented through the NPU.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) and the like that are created during use of the electronic device 100. In addition, the internal memory 121 may include a high-speed random access memory, or may include a non-volatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be configured to play music or answer a hands-free call over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D may be the USB port 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There is a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation through the pressure sensor 180A. The electronic device 100 may calculate a touch location based on a detection signal of the pressure sensor 180A. In some embodiments, touch operations performed at a same touch location with different touch operation intensity may correspond to different operation instructions. For example, when a touch operation whose touch operation intensity is less than a first pressure threshold is performed on a Messages application icon, a command for viewing an SMS message is executed. When a touch operation whose touch operation intensity is greater than or equal to the first pressure threshold is performed on the Messages application icon, a command for creating a new SMS message is executed.

The gyroscope sensor 180B may be configured to determine a moving posture of the electronic device 100. In some embodiments, an angular velocity of the electronic device 100 around three axes (that is, axes x, y, and z) may be determined by using the gyroscope sensor 180B. The gyroscope sensor 180B may be configured to implement image stabilization during shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in navigation and motion sensing game scenarios.

The barometric pressure sensor 180C is configured to measure barometric pressure. In some embodiments, the electronic device 100 calculates an altitude based on a value of the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between landscape mode and portrait mode or a pedometer.

The distance sensor 180F is configured to measure a distance. The electronic device 100 may measure a distance in an infrared manner or a laser manner. In some embodiments, in a shooting scenario, the electronic device 100 may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a leather case mode or a pocket mode to automatically unlock or lock the screen.

The ambient light sensor 180L is configured to sense ambient light brightness. The electronic device 100 may adaptively adjust brightness of the display 194 based on the sensed ambient light brightness. The ambient light sensor 180L may also be configured to automatically adjust a white balance during shooting. The ambient light sensor 180L may also work with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to unlock the device, access an application, shoot, and answer a call with the fingerprint.

The temperature sensor 180J is configured to detect a temperature. In some embodiments, the electronic device 100 executes a temperature processing policy through the temperature detected by the temperature sensor 180J. For example, when a temperature reported by the temperature sensor 180J exceeds a threshold, the electronic device 100 lowers performance of a processor near the temperature sensor 180J, to reduce power consumption and implement thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142 to avoid abnormal shutdown due to a low temperature.

The touch sensor 180K may also be referred to as a "touch component". The touch sensor 180K may be disposed on the display 194, and the touch sensor 180K and the display 194 form a touchscreen, which is also referred to as a "touchscreen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, and receive a blood pressure beating signal. In some embodiments, the bone conduction sensor 180M may alternatively be disposed in the headset, to constitute a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by using the bone conduction sensor 180M, to implement a heart rate detection function.

The button 190 includes a power button, a volume button, and the like. The button 190 may be a mechanical button or a touch button. The electronic device 100 may receive a key input, and generate a key signal input related to a user setting and function control of the electronic device 100.

The motor 191 may generate a vibration prompt. The motor 191 may be used for an incoming call vibration prompt or a touch vibration feedback. For example, touch operations performed on different applications (for example, shooting and audio playing) may correspond to different vibration feedback effects. The motor 191 may also correspond to different vibration feedback effects for touch operations performed on different areas of the display 194. Different application scenarios (for example, a time reminder, a received message, an alarm clock, and a game) may also correspond to different vibration feedback effects. A touch vibration feedback effect may further be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano SIM card, a micro SIM card, a SIM card, and the like. A plurality of cards may be simultaneously inserted into the same SIM card interface 195. The plurality of cards may be of a same type or of different types. The SIM card interface 195 is compatible with different types of SIM cards. The SIM card interface 195 is also compatible with an external storage card. The electronic device 100 interacts with a network through the SIM card, to implement functions such as calling and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In this embodiment of the present invention, an Android system of a layered architecture is used as an example to illustrate the software structure of the electronic device 100.

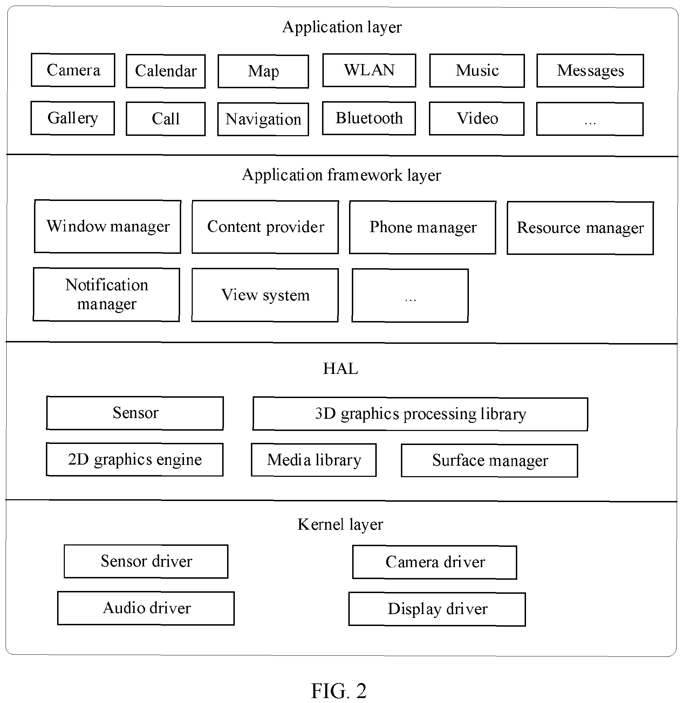

FIG. 2 is a block diagram of a software structure of an electronic device 100 according to an embodiment of the present invention.

In a layered architecture, software is divided into several layers, and each layer has a clear role and task. The layers communicate with each other through a software interface. In some embodiments, the Android system is divided into four layers from top to bottom: an application layer, an application framework layer, an Android runtime (Android runtime) and hardware abstraction layer, and a kernel layer. The kernel layer may also be represented as a driver layer.

The application layer may include a series of application packages.

As shown in FIG. 2, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, lock a screen, take a screenshot, and the like.

The content provider is configured to store and obtain data, and enable the data to be accessed by an application. The data may include a video, an image, audio, calls that are made and received, a browsing history and bookmarks, a phone book, and the like.

The view system includes visual controls, such as a control for displaying a text and a control for displaying an image. The view system may be configured to construct an application. A display interface may include one or more views. For example, a display interface including a notification icon of Messages may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a message of a notification type. The displayed notification information may automatically disappear after a short pause without user interaction. For example, the notification manager is configured to notify download completion, provide a message notification, and the like. The notification manager may alternatively be a notification that appears in a top status bar of a system in a form of a graph or a scroll bar text, for example, a notification of an application running on the background or a notification that appears on a screen in a form of a dialog window. For example, text information is displayed in the status bar, an announcement is given, the electronic device vibrates, or the indicator light blinks.

The Android runtime includes core libraries and a virtual machine. The Android runtime is responsible for scheduling and management of the Android system.

The core libraries include two parts: a function that needs to be invoked in java language and a core library of Android.

The application layer and the application framework layer run on a virtual machine. The virtual machine executes java files at the application layer and the application framework layer as binary files. The virtual machine is configured to implement functions such as object lifecycle management, stack management, thread management, security and exception management, and junk files collection.

The system library may include a plurality of functional modules, for example, a surface manager (surface manager), a media library (Media Library), a 3D graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording of a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following uses an example in which a user taps a control of a floating window of the electronic device 100 shown below to describe working processes of software and hardware of the electronic device 100. An on/off state of the control of the floating window indicates whether display of the floating window can rotate with a change in a screen direction of the electronic device. Therefore, the control may also be referred to as a rotation control.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. For example, the touch operation is a touch-click operation. An electronic device application invokes an interface of the application framework layer to adjust the control from the closed state to the open state.

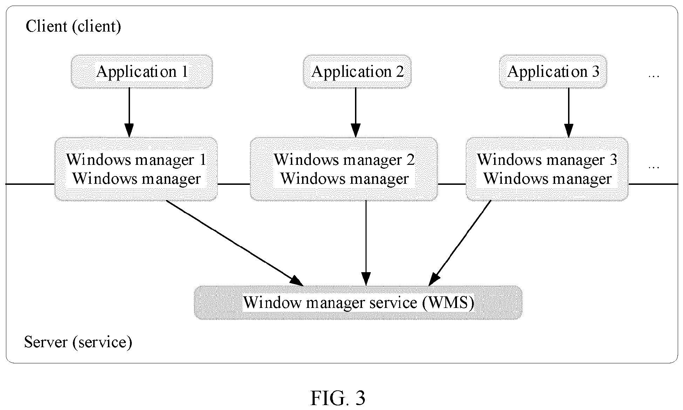

FIG. 3 is a schematic diagram of a working mechanism of a window manager in FIG. 2.

As shown in FIG. 2, the window manager is a global, unique service (service) in the system, and independent of applications. The window manager is shared by all applications. The window manager system is based on a client/service (client/service, C/S) mode. The entire window system is divided into two parts: a server (service) and a client (client). The client is an application, which is responsible for requesting to create and use windows. The server is a window manager service (Window Manager Service, WMS), which is responsible for maintaining and displaying windows. The client does not directly interact with the window manager service, but directly interacts with a local object window manager (window manager or Window Manager), and then the window manager (window manager) interacts with the window manager service (Window Manager Service). This interaction is transparent to the application, and the application is unaware of the existence of the window manager service. For example, an application 1 may interact with a local object window manager (window manager or Window Manager) 1, so that the window manager (Window Manager) 1 interacts with the window manager service to create and use windows.

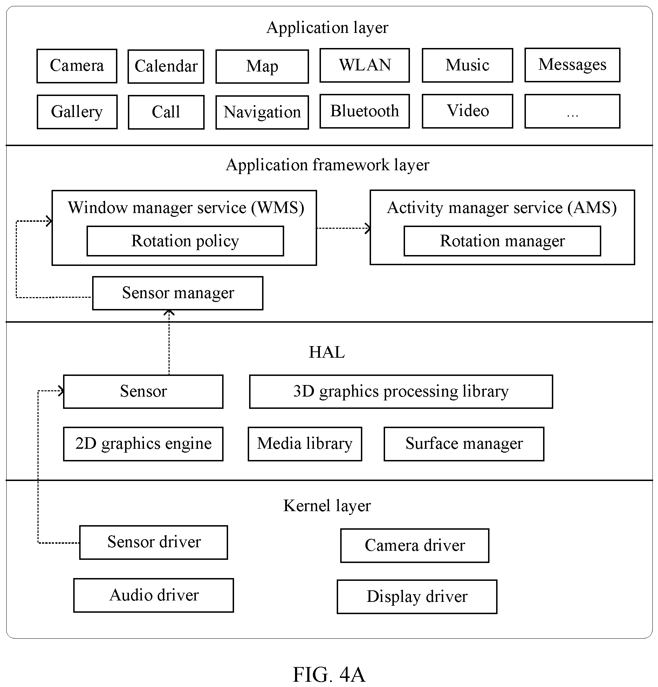

FIG. 4A is specifically a schematic diagram of a working mechanism of a window manager according to an embodiment of this application.

When a screen direction (for a definition of the screen direction, refer to descriptions below) of the electronic device 100 changes, an acceleration sensor driver (Sensor Driver) at the kernel layer reports a rotation angle to a sensor manager (Sensor Manager) at the framework layer by using the HAL (hardware abstraction layer). The sensor manager manages sensor data, and sends, i, a newly detected screen direction (Rotation) to the WMS that is being monitored.

As shown above, the WMS is responsible for managing the display, size, hierarchy, and the like of the application window. When the WMS receives a direction change callback from the sensor manager, the WMS determines whether a full-screen window of an application or a split-screen window or a floating window of a plurality of applications can rotate freely (depending on whether foreground full-screen applications or a plurality of split-screen or floating applications support rotation).

Specifically, the electronic device 100 may invoke a rotation policy module, and determine, based on direction configuration of a visible window, whether there is a window that can freely rotate.

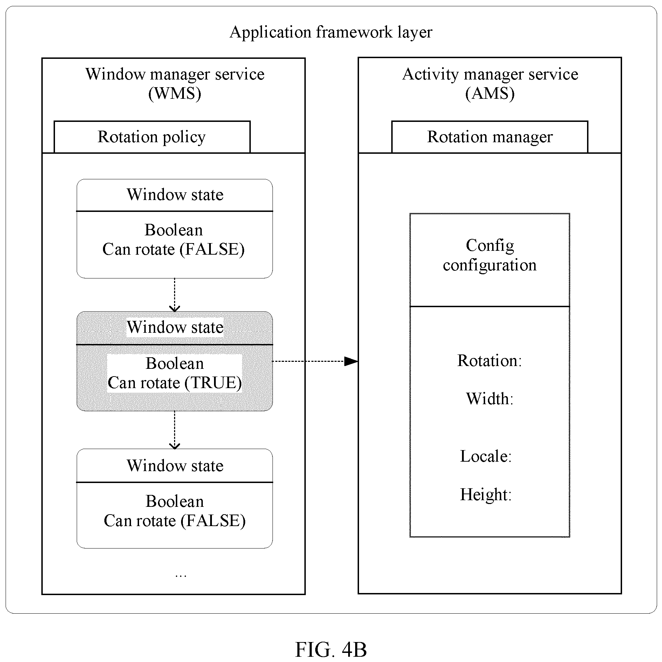

Refer to FIG. 4B. The WMS may determine, based on a state of each visible window, whether a window currently visible to a user can freely rotate. Each window state may be represented by a window state, which stores information such as a position, a size, and a name of a window. An independent rotation switch of a window is stored in a variable "can rotate". When a user clicks to enable a window rotation switch corresponding to the window state, the variable is set to true. The rotation policy module traverses all window objects of the window state. If a window object of the window state whose value of "can rotate" is true exists, the rotation policy module determines that a window can be freely rotated. Further, when there is a window that can freely rotate, the window is displayed based on a screen direction of the electronic device, so that a display direction of an application window corresponds to the screen direction of the electronic device.

Still refer to FIG. 4B. FIG. 4B further shows an activity manager service (referred to as an AMS). The AMS is responsible for managing application startup, resources, visibility, and the like, and the rotation manager is responsible for application-level window direction management. When a window rotation notification from the WMS is received, the rotation manager calculates, based on preset settings, information such as the position, the size, and the direction of each window obtained after free rotation, zooms in or out the rotated window based on requirements, and packs information into Config configuration by using the rotation manager. Further, the AMS calls back the Config configuration of different applications to each application, and the application refreshes the display direction and the display size of the interface according to the Config, and finally completes free rotation of the window.

In this application, the rotation policy module is added to an original WMS to manage rotation of a single window. The WMS may rotate the single window by using the newly added rotation manager module, to improve a degree of freedom of window rotation.

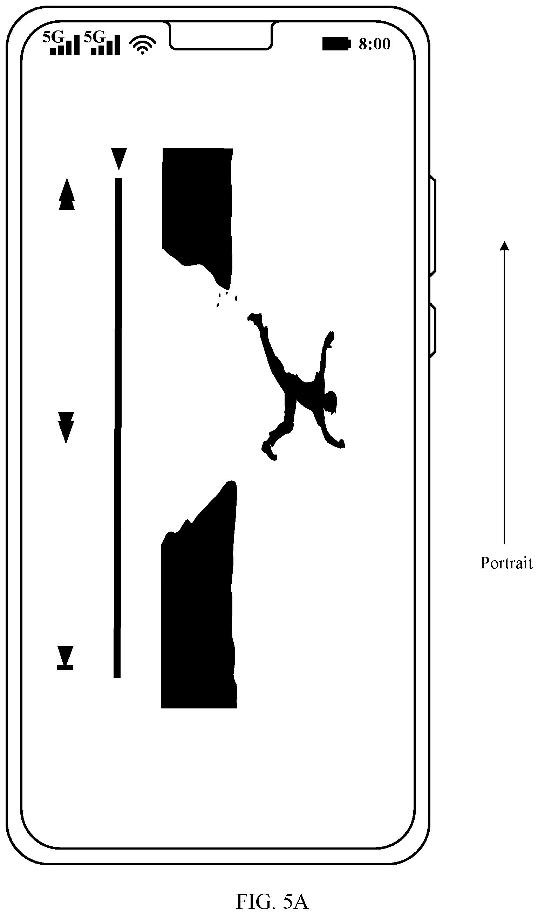

FIG. 5A to FIG. 5D are specifically schematic diagrams of a screen direction of an electronic device 100.

The electronic device 100 includes four screen directions, including a portrait direction, a landscape direction, a reverse portrait direction, and a reverse landscape direction. The screen direction may be used to indicate a body posture of the electronic device 100. It may be understood that the screen direction may alternatively indicate a physical direction of the electronic device 100.

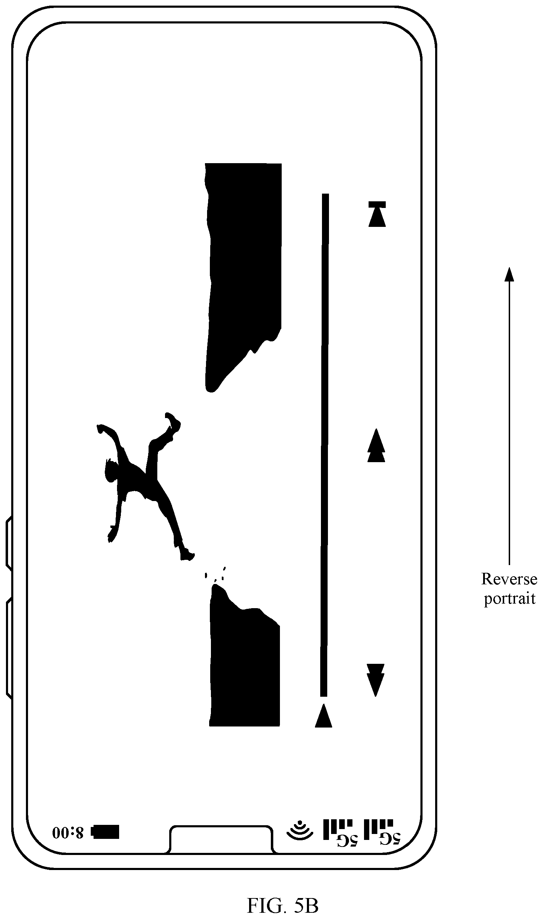

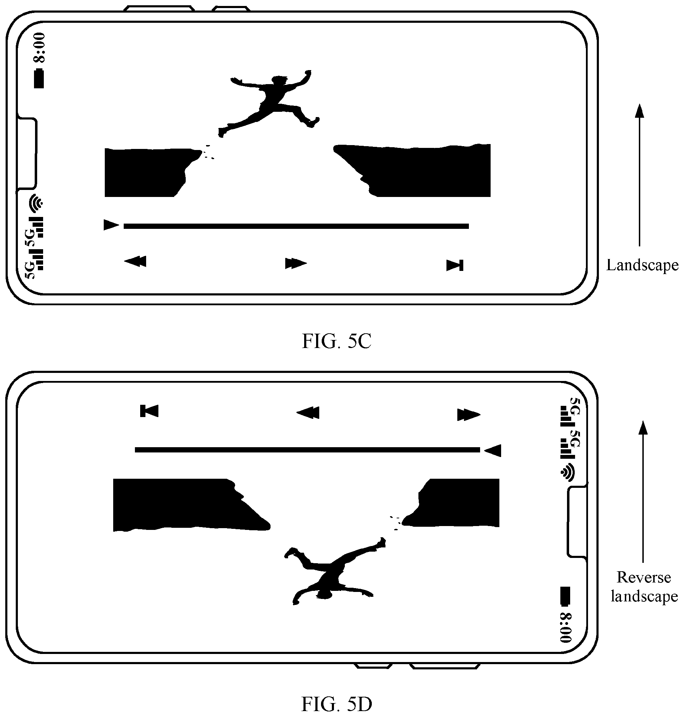

Refer to FIG. 5A. When a screen of the electronic device 100 is placed in a forward direction, the screen direction of the electronic device 100 is the portrait direction. Refer to FIG. 5B. When the electronic device 100 is placed upside down, the screen direction of the electronic device is the reverse portrait direction. Further, refer to FIG. 5C. When the electronic device is placed by rotating 90 degrees counterclockwise from the portrait direction, the screen direction of the electronic device is the landscape direction. Refer to FIG. 5D. When the electronic device is placed by rotating 90 degrees clockwise from the portrait direction, the screen direction of the electronic device is the reverse landscape direction.

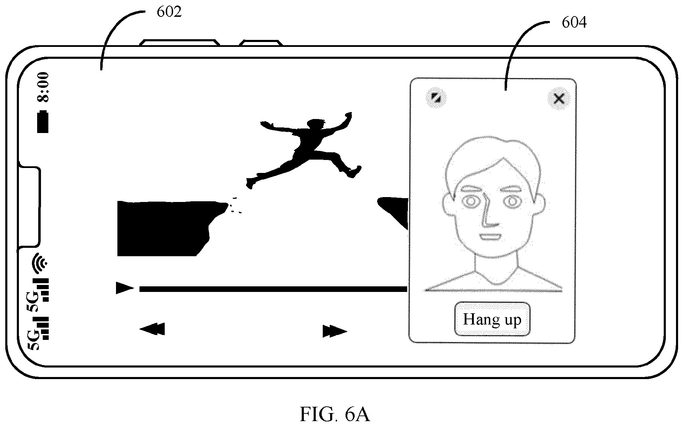

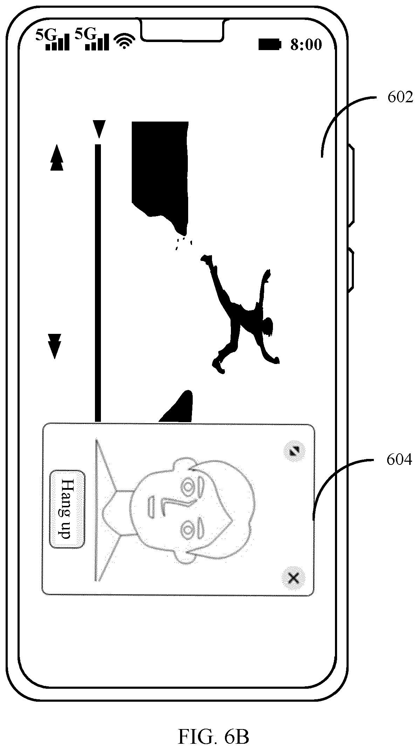

FIG. 6A and FIG. 6B are specifically schematic diagrams of displaying an application window of an electronic device 100 in the conventional technology.

As shown in FIG. 6A, the electronic device 100 displays a window of a first application 602 and a window of a second application 604. The window of the first application 602 is displayed in a full-screen mode, and the second application 604 is displayed in a floating window mode.

In this application, the full-screen mode, also referred to as full-screen display, means that the entire screen of the electronic device 100 displays interface content of one application. To be specific, the interface of the application fills the entire screen. In this embodiment of this application, when an application window is displayed in full screen, a state of the window is defined as a full screen state, and correspondingly, an application displayed in the window is defined as a full screen display application. In an embodiment, when running the first application, the electronic device 100 may forcibly display the first application in full screen. For example, the first application may be a video application, a game application, or the like.

Further, the floating mode in this application, also referred to as floating display, means that at least one application window is displayed on another user interface in floating mode, and partially covers the another user interface. When the user does not perform an operation on the application window in floating display, the application window in floating display remains at a fixed position and does not change with a change in another user interface. The at least one application window is displayed in a superimposed manner on a screen, the application windows may be partially or completely covered, and a size of each application window may be changed or each application window can be moved. In this embodiment of this application, when a window is displayed in the floating mode, for example, floating on a window displayed in full screen or floating on a window displayed in a split screen mode, a state of the window is defined as a floating state, and correspondingly, an application displayed in the window is defined as a floating display application. The window that displays the application is a floating window.

In FIG. 6A, the screen direction of the electronic device 100 is a landscape direction, and display directions of the window of the first application 602 and the window of the second application 604 are both landscape directions. The user may adjust the screen direction of the electronic device 100. For example, the user adjusts the screen direction of the electronic device 100 from the landscape direction in FIG. 6A to the portrait direction shown in FIG. 6B. In the conventional technology, when the screen direction of the electronic device changes from the landscape direction to the portrait direction, display directions of the window of the first application 602 and the window of the second application 604 cannot be changed, and are still in the landscape directions.

Specifically, in the conventional technology, the window of the second application 604 is a floating window, a display direction of the floating window is always consistent with a display direction of the window of the first application 602, and the electronic device 100 cannot rotate the application window based on a user requirement.

Further, because a width of the electronic device in a second direction is relatively small, the floating window cannot be rotated, and therefore cannot better occupy more display areas of the display screen, thereby affecting user experience.

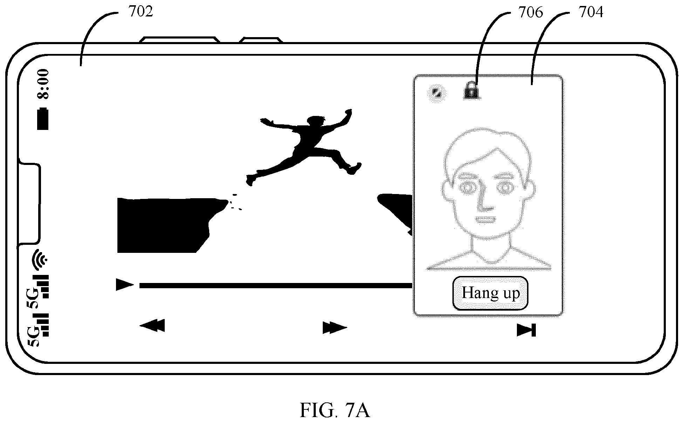

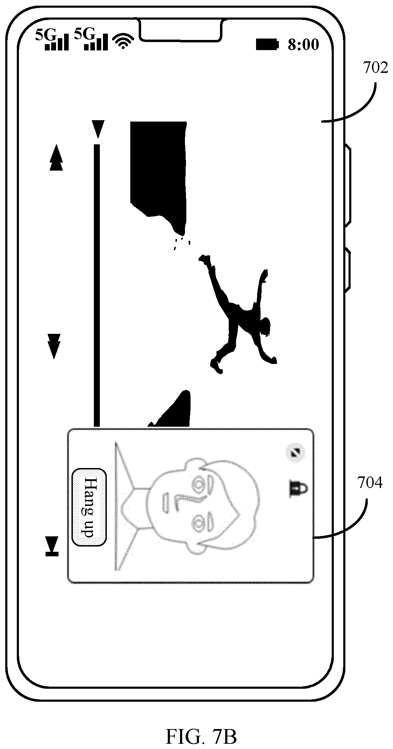

FIG. 7A and FIG. 7B are schematic diagrams of a graphical interface of a window display method according to an embodiment of this application.

As shown in FIG. 7A, the screen direction of the electronic device 100 is a landscape direction. As shown in FIG. 7B, the screen direction of the electronic device is a portrait direction.

In FIG. 7A, a display direction of the window of the first application 702 is a landscape direction, the window of the second application 704 is a floating window, and a display direction of the window of the second application 704 is a landscape direction.

In an example, the floating window includes a control 706. Specifically, when the control is in an open state, it indicates that the display direction of the floating window may be displayed based on the screen direction of the electronic device. When the control is in a closed state, it indicates that the display direction of the floating window cannot be changed based on the screen direction of the electronic device.

It may be understood that, an image, a shape, a location, and the like of the control are not limited to that shown in FIG. 7A, and there may be more settings. This is not limited herein.

A state of the control 706 in FIG. 7A is a closed state. When the screen direction of the electronic device changes from the landscape direction in FIG. 7Ato the portrait direction in FIG. 7B, display directions of the window of the first application 702 and the window of the second application 704 are still the landscape directions.

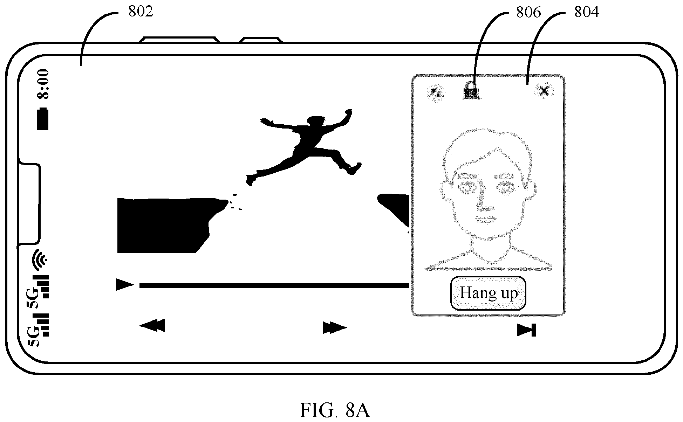

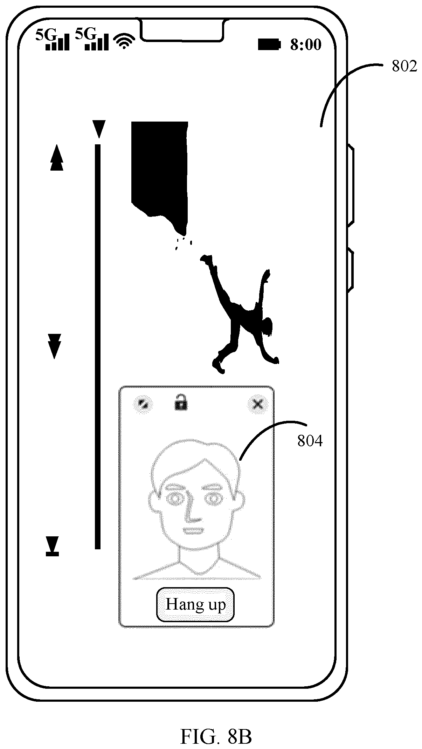

FIG. 8 is a schematic diagram of a graphical interface of a window display method according to an embodiment of this application.

As shown in FIG. 8A, the screen direction of the electronic device 100 is a landscape direction, a display direction of a window of a first application 802 is a landscape direction, and a display direction of a window of a second application 804 is also a landscape direction. The window of the first application 802 is a full-screen display window, the window of the second application 804 is a floating window, and a control 806 in the window of the second application is in an open state.

When the electronic device detects that the screen direction of the electronic device changes from the landscape direction to the portrait direction, as shown in FIG. 8B, the electronic device 100 keeps the display direction of the window of the first application 802 unchanged (still displayed in the landscape direction), and rotates the window of the second application and adjusts the display direction of the window of the second application from the landscape direction to the portrait direction, so that the window of the second application is consistent with the screen direction of the electronic device.

In an embodiment, when the screen direction of the electronic device changes from the landscape direction to the portrait direction, the display direction of the window of the second application 804 changes based on the screen direction of the electronic device, to better display the window of the second application. When the display direction of the window of the first application changes from the landscape direction to the portrait direction, the window of the second application may be enlarged, for example, by a preset proportion or a preset multiple. In another embodiment that can be implemented, when the display direction of the second application 804 changes, the window of the second application may be scaled down, for example, by a preset proportion.

In another embodiment of this application, the window of the second application further includes a zoom-in control and a zoom-out control. When the screen direction of the electronic device is adjusted from the landscape direction to the portrait direction, the display direction of the window of the second application is also adjusted from the landscape direction to the portrait direction. The user may tap the zoom-in control, so that the electronic device 100 responds to the tap operation of the user, and zooms in the window of the second application 804. Alternatively, the user may tap the zoom-out control, and the electronic device 100 responds to the tap operation of the user, and zooms out the window of the second application 804.

In an embodiment of this application, the first application 802 and the second application 804 may be the same application or different applications.

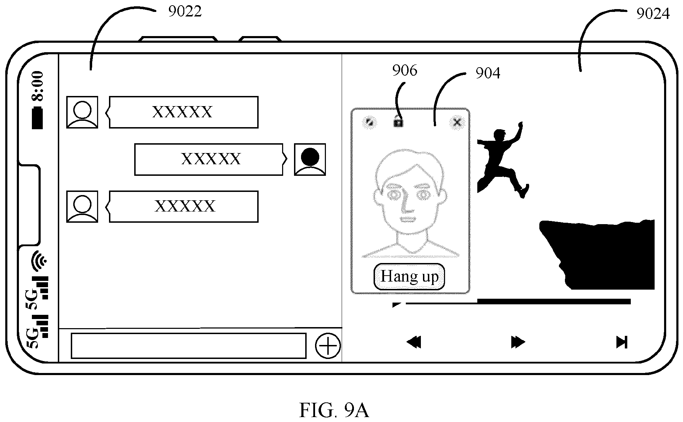

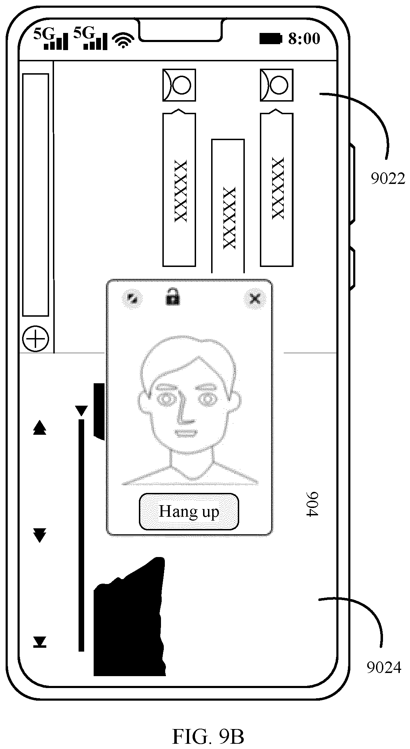

FIG. 9 is a schematic diagram of a graphical interface of a window display method according to an embodiment of this application.

As shown in FIG. 9A, the screen direction of the electronic device 100 is a landscape direction. The electronic device 100 displays a window of a first application 9022, a window of a second application 9024, and a window of a third application 904. Display directions of the window of the first application 9022, the window of the second application 9024, and the window of the second application 904 are all landscape directions. The window of the first application 9022 and the window of the second application 9024 are displayed on split screens, and the window of the third application 904 is a floating window.

It should be noted that, split-screen display, also referred to as a split-screen mode, means that two or more application windows respectively occupy a part of a screen, any two application windows do not overlap, and each application window may change a size, or may change a position of the application window, or may be immovable. Alternatively, only a fixed position can be moved, for example, positions of two application windows can be exchanged. In this embodiment of this application, when a window is displayed on split screens, a state of the window is defined as a split-screen state, and correspondingly, an application displayed in the window is defined as a split-screen display application.

The window of the third application 904 includes a control, and the control 906 is in an open state. When the electronic device detects that the screen direction of the electronic device changes from the landscape direction shown in FIG. 9A to the portrait direction shown in FIG. 9B, the electronic device 100 keeps the display directions of the window of the first application 9022 and the window of the second application 9024 unchanged (still displayed in the landscape direction), and rotates the window of the third application 904 and adjusts a display direction of the window of the third application from a landscape direction to a portrait direction, so that the window of the third application is consistent with the screen direction of the electronic device.

In an embodiment of this application, the first application 9022, the second application 9024, and/or the third application 904 may be the same application.

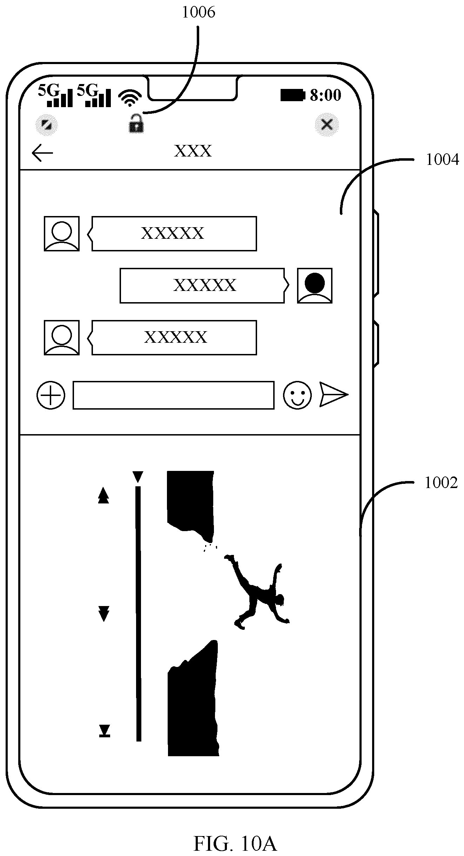

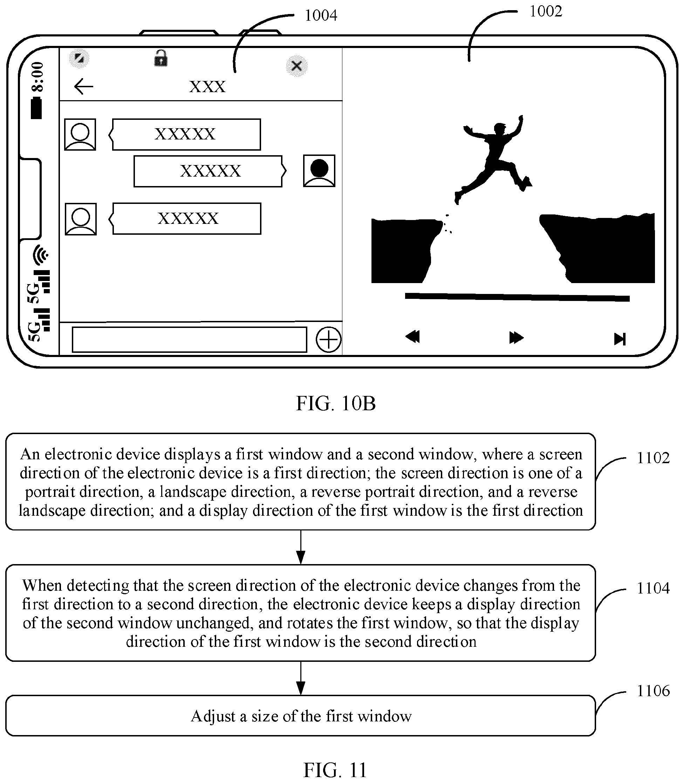

FIG. 10 is a schematic diagram of a graphical interface of a window display method according to an embodiment of this application.

As shown in FIG. 10A, the screen direction of the electronic device is a portrait direction, and as shown in FIG. 10B, the screen direction of the electronic device 100 is a landscape direction.

In FIG. 10A, the electronic device displays a window of a first application 1002 and a window of a second application 1004, and the window of the second application 1004 includes a control 1006. The windows of the first application 1002 and the second application 1004 are displayed on split screens. A display direction of the first application 1002 is a landscape direction, and a display direction of the window of the second application 1004 is a portrait direction.

In an embodiment, the control of the window of the second application 1004 is in an open state. When the screen direction of the electronic device 100 changes from the portrait direction to the landscape direction, the electronic device 100 keeps the display direction of the window of the first application 1002 unchanged (still displayed in the landscape direction), and rotates the window of the second application 1004 and adjusts the display direction of the window of the second application from the portrait direction to the landscape direction, so that the window of the second application 1004 is consistent with the screen direction of the electronic device.

In a possible implementation in an embodiment of this application, the first application 1002 and the second application 1004 may be the same application.

FIG. 11 is a flowchart of a window display method according to an embodiment of this application. The window display method is applied to the foregoing electronic device 100, and may include the following steps.

Step 1102: The electronic device 100 displays a first window and a second window, where a screen direction of the electronic device is a first direction; the screen direction is one of a portrait direction, a landscape direction, a reverse portrait direction, and a reverse landscape direction; and a display direction of the first window is the first direction.

In an embodiment of this application, the first window and the second window may be windows of different applications, or may be windows of the same application.

In an embodiment of this application, the first window is a floating window.

In an embodiment of this application, the second window is displayed in full screen, or the second window and the first window are displayed on split screens, or the second window and another window are displayed on split screens.

Step 1104: When detecting that the screen direction of the electronic device changes from the first direction to a second direction, the electronic device keeps a display direction of the second window unchanged, and rotates the first window, so that the display direction of the first window is the second direction.

In this step, when detecting that the screen direction of the electronic device changes, the electronic device rotates the first window, so that the display direction of the first window corresponds to the changed screen direction of the electronic device.

In an embodiment, when detecting that the screen direction of the electronic device changes from the first direction to the second direction, the electronic device keeps the display direction of the second window unchanged, determines whether the second window meets a preset condition, and rotates the first window if the preset condition is met.

In an embodiment, the first window includes a first control, the first control includes an open state and a closed state, and when the first control is in the open state, a display direction of the first window may change based on the screen direction of the electronic device. When rotating the first window, the electronic device may determine whether the first control is in an open state, and if the first control is in the open state, rotate the first window.

Step 1104: Adjust a size of the first window.

In an embodiment of this application, after the first window is rotated, the first window may be zoomed in or out based on the screen direction of the electronic device.

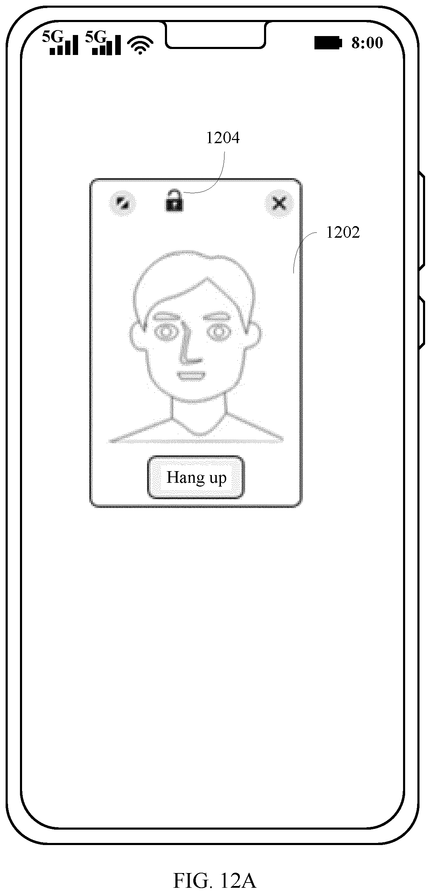

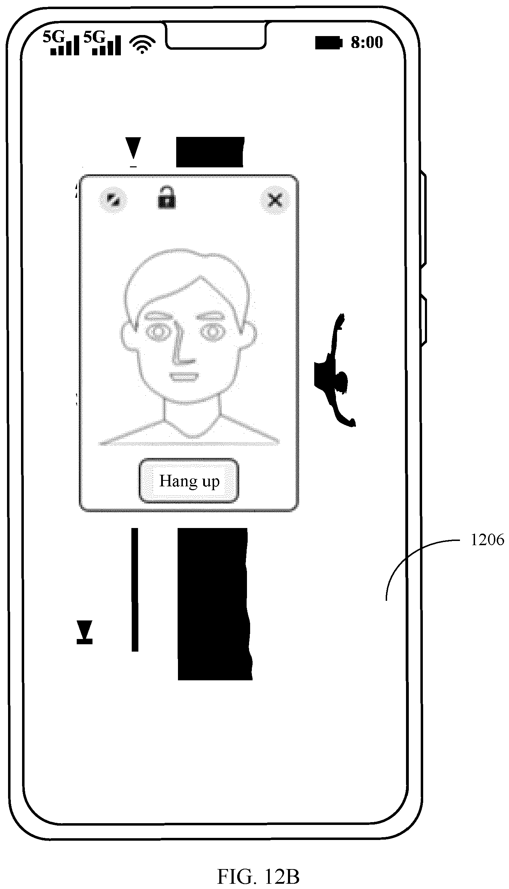

FIG. 12A and FIG. 12B show a graphical interface of a window display method according to an embodiment of this application.

In FIG. 12A and FIG. 12B, screen directions of the electronic device 100 are all portrait directions. The electronic device 100 displays a window of a first application 1202. The window of the first application includes a control 1204, and the control is in an open state. The screen direction of the electronic device 100 is the portrait direction, and a display direction of the window of the first application 1202 is the portrait direction.

When the control 1204 is in an open state, it indicates that the display direction of the window of the first application may be displayed based on the screen direction of the electronic device. When the control is in a closed state, it indicates that the display direction of the window of the first application cannot be changed based on the screen direction of the electronic device.

In an embodiment of this application, when opening a window of a second application 1206, the electronic device 100 keeps the display direction of the window of the first application 1202 unchanged, and displays the window of the second application in the landscape direction. Specifically, the display direction of the window of the second application may be preset in advance. For example, the window of the second application is displayed only in a landscape direction or a reverse landscape direction.

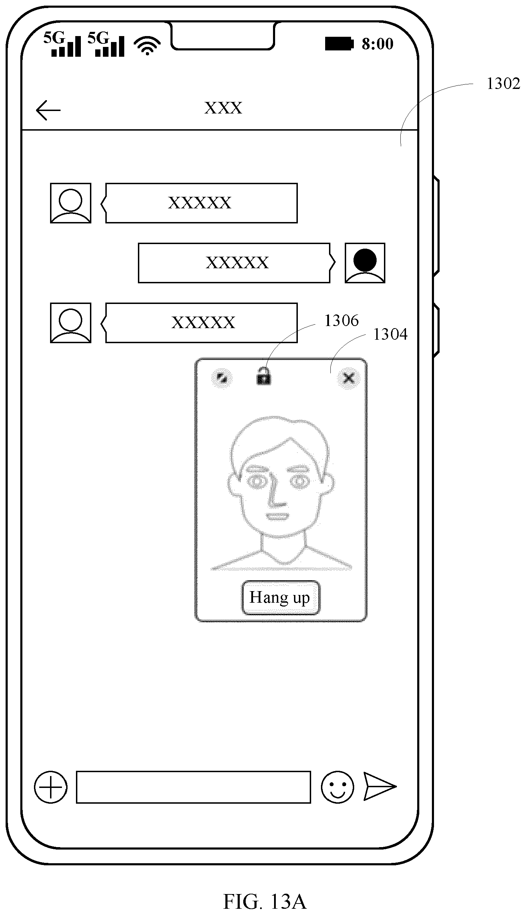

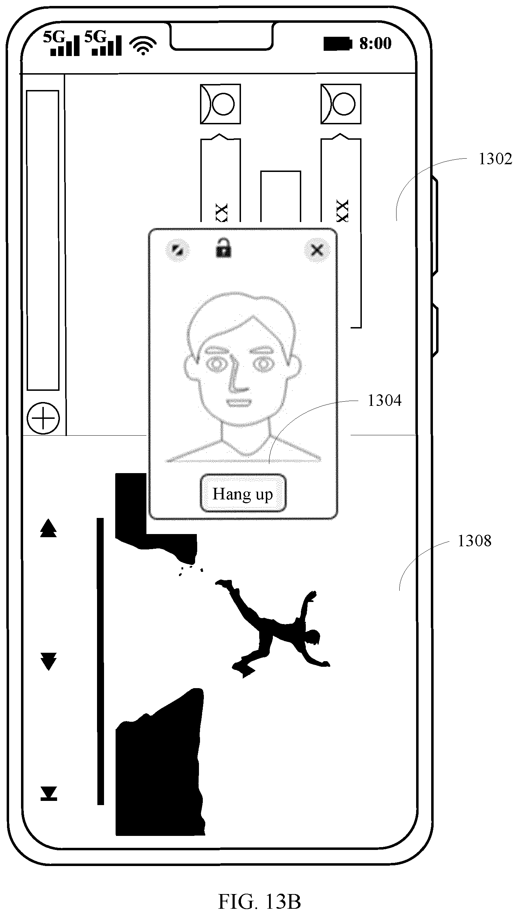

FIG. 13A and FIG. 13B show a graphical interface of a window display method according to an embodiment of this application.

In FIG. 13A and FIG. 13B, screen directions of the electronic device are all portrait directions. In FIG. 13A, the electronic device 100 displays a window of a first application 1302 and a window of a second application 1304, the window of the second application may be a floating window, the window of the second application includes a control 1306, and the control 1306 is in an open state. In FIG. 13A, a display direction of the window of the first application and a display direction of the window of the second application are portrait directions.

In an embodiment, refer to FIG. 13B. When opening a window of a third application 1308, the electronic device 100 keeps the display direction of the window of the second application 1304 unchanged, and displays the windows of the third application 1308 and the first application 1302 on split screens. In addition, the display direction of the window of the third application 1308 is a landscape direction. Specifically, the display direction of the third application may be preset in advance. For example, the window of the third application is displayed only in a landscape direction or a reverse landscape direction.

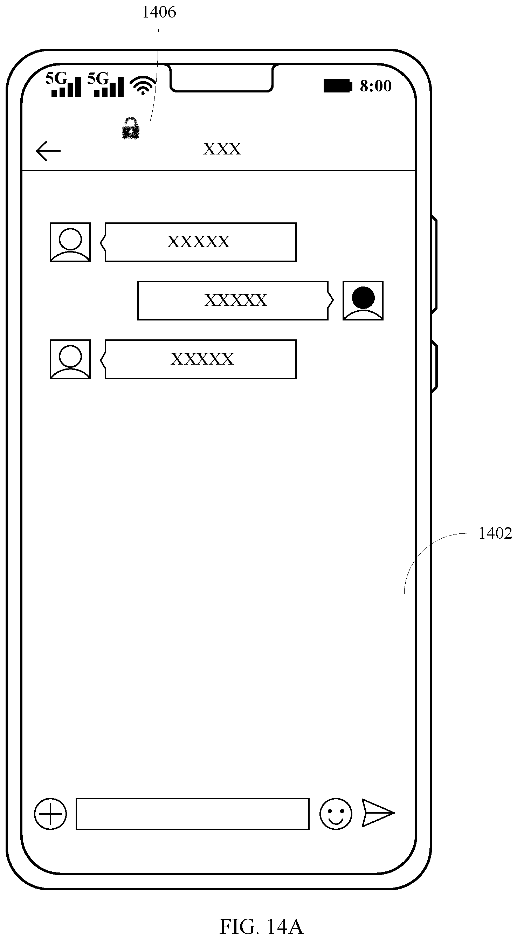

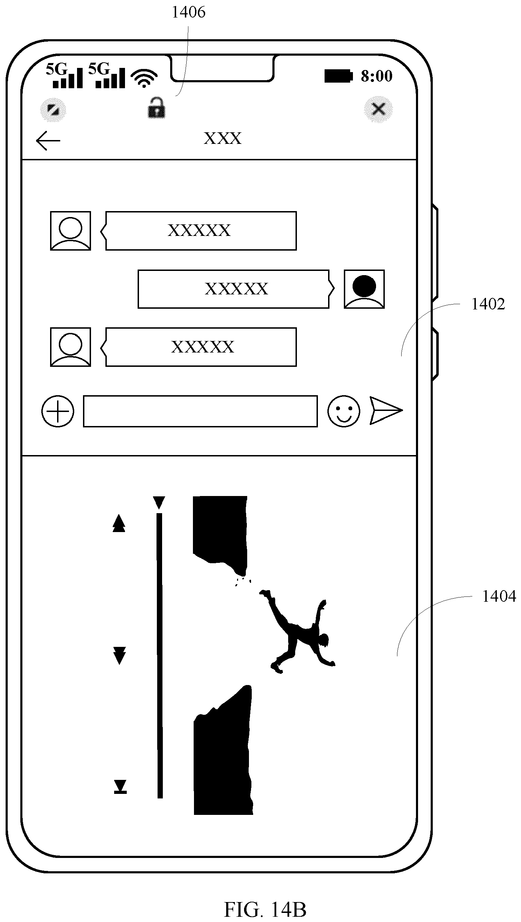

FIG. 14A and FIG. 14B show a graphical interface of a window display method according to an embodiment of this application.

In FIG. 14A and FIG. 14B, screen directions of the electronic device are all portrait directions. In FIG. 14A, a display direction of a window of a first application 1402 in the electronic device 100 is a portrait direction, the window of the first application 1402 includes a control 1406, and the control is in an open state.

In an embodiment, refer to FIG. 14B. When opening a window of a second application 1404, the electronic device 100 keeps the display direction of the window of the first application unchanged, and displays the window of the first application 1402 and the window of the second application 1404 on split screens. The window of the second application 1404 is displayed in a landscape direction. Specifically, the display direction of the window of the second application 1404 may be preset in advance. For example, the window of the second application 1404 is displayed only in a landscape direction or a reverse landscape direction.

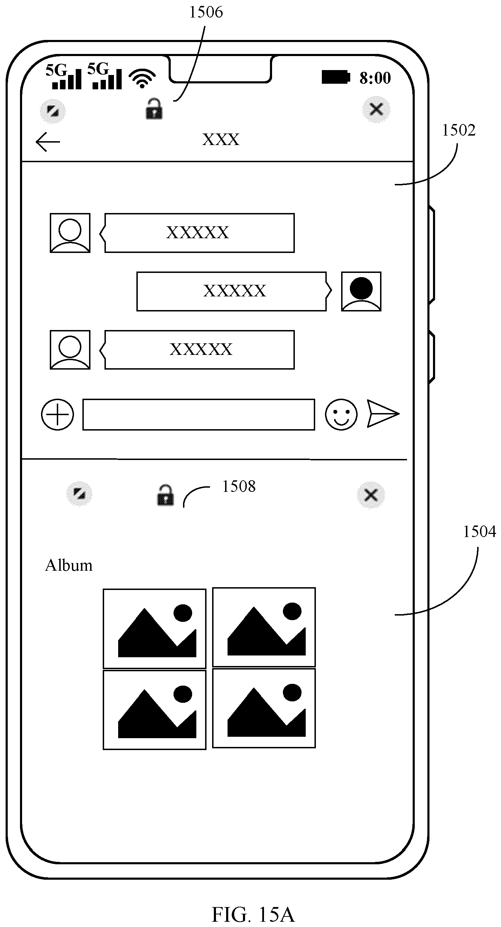

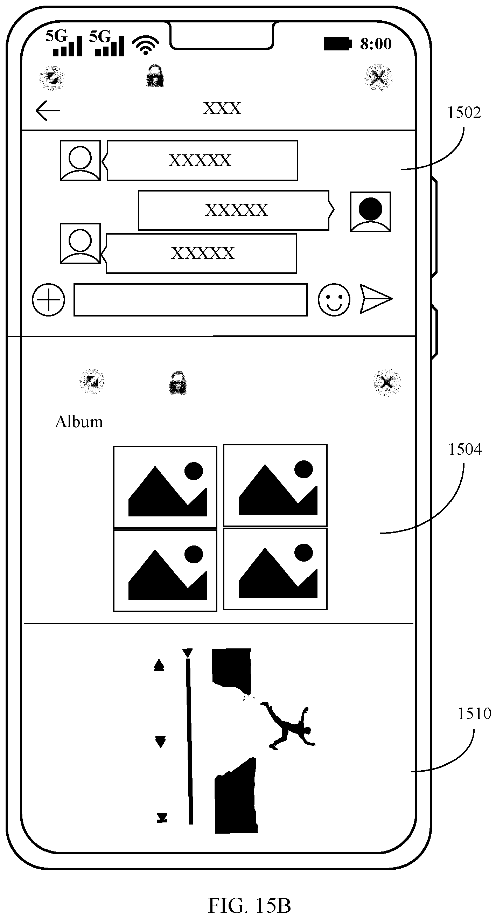

FIG. 15A and FIG. 15B show a graphical interface of a window display method according to an embodiment of this application.

In FIG. 15A and FIG. 15B, screen directions of the electronic device 100 are all portrait directions. In FIG. 15A, a window of a first application 1502 and a window of a second application 1504 in the electronic device 100 are displayed on split screens. A display direction of the window of the first application 1502 is a portrait direction, the window of the first application 1502 includes a control 1506, and the control is in an open state. A display direction of the window of the second application 1504 in the electronic device 100 is a portrait direction, the window of the second application 1504 includes a control 1508, and the control is in an open state.

In an embodiment, refer to FIG. 15B. When opening a window of a third application 1510, the electronic device 100 keeps display directions of the window of the first application 1502 and the window of the second application 1504 unchanged. The windows of the first application 1502, the second application 1504, and the third application 1510 are displayed on split screens, and a display direction of the window of the third application 1510 is a landscape direction. Specifically, the display direction of the window of the third application 1510 may be preset in advance. For example, the window of the third application 1510 is displayed only in a landscape direction or a reverse landscape direction.

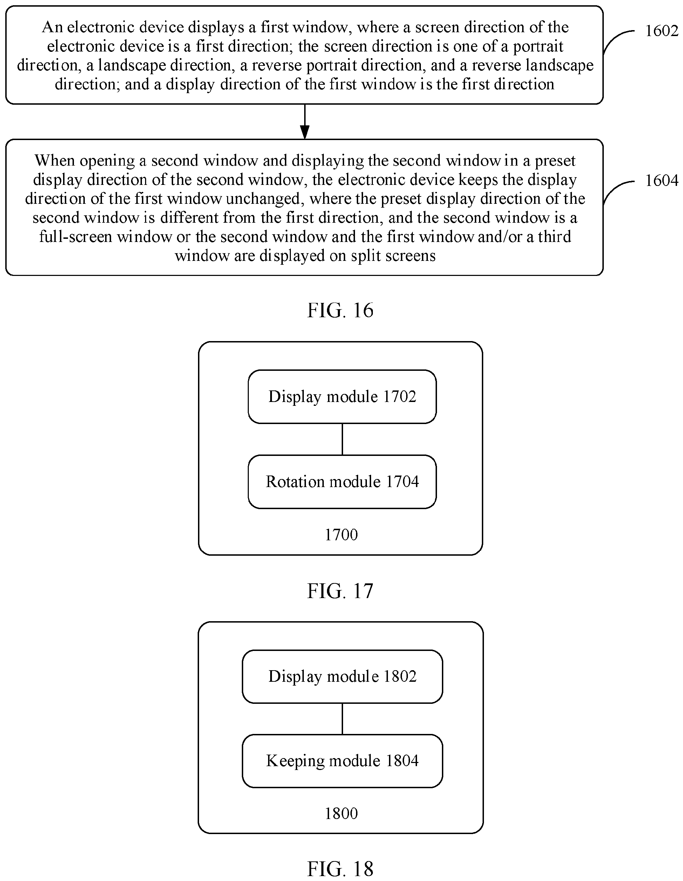

FIG. 16 is a flowchart of a window display method according to an embodiment of this application. The window display method is applied to the foregoing electronic device 100, and may include the following steps.

Step 1602: The electronic device displays a first window, where a screen direction of the electronic device is a first direction; the screen direction is one of a portrait direction, a landscape direction, a reverse portrait direction, or a reverse landscape direction; and a display direction of the first window is the first direction.

In an embodiment of this application, the first window is a floating window.

Step 1604: When opening a second window and displaying the second window in a preset display direction of the second window, the electronic device keeps the display direction of the first window unchanged, where the preset display direction of the second window is different from the first direction, and the second window is a full-screen window or the second window and the first window and/or a third window are displayed on split screens.

In an embodiment of this application, the first window and the second window may be windows of different applications, or may be windows of the same application.

In an embodiment of this application, when opening a second application window, the electronic device 100 may determine whether the first window meets the preset condition, and if the first window meets the preset condition, keep the display direction of the first window unchanged. Specifically, it may be determined whether a first control on the second window is in an open state, and if the first control on the second window is in the open state, the electronic device 100 keeps the display direction of the first window unchanged. That the first control is in an open state indicates that the first window is displayed based on the screen direction of the electronic device.

According to the window display method shown in this application, various windows of the electronic device can be flexibly rotated freely.

In an embodiment of this application, a window display apparatus 1700 is further provided, including:
a display module 1702, configured to display, by the electronic device, a first window and a second window, where a screen direction of the electronic device is a first direction; the screen direction is one of a portrait direction, a landscape direction, a reverse portrait direction, and a reverse landscape direction; and a display direction of the first window is the first direction; and
a rotation module 1704, configured to: when detecting that the screen direction of the electronic device changes from the first direction to a second direction, keep, by the electronic device, a display direction of the second window unchanged, and rotate the first window, so that the display direction of the first window is the second direction.

In an embodiment of this application, a window display apparatus 1800 is further provided, including:
a display module 1802, configured to display, by the electronic device, a first window, where a screen direction of the electronic device is a first direction; the screen direction is one of a portrait direction, a landscape direction, a reverse portrait direction, and a reverse landscape direction; and a display direction of the first window is the first direction; and
a keeping module 1804, configured to keep the display direction of the first window unchanged when the electronic device opens a second window and displays the second window in a preset display direction of the second window, where the preset display direction of the second window is different from the first direction, and the second window is a full-screen window or the second window and the first window and/or a third window are displayed on split screens.

An embodiment of this application further provides a computer-readable storage medium. The computer-readable storage medium includes computer instructions. When the computer instructions are run on an electronic device, the electronic device is enabled to perform the window display method provided in this application.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, for example, a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A window display method, applied to an electronic device and comprising:
displaying, by the electronic device, a first window and a second window, wherein a screen direction of the electronic device is a first direction; the screen direction is one of a portrait direction, a landscape direction, a reverse portrait direction, and a reverse landscape direction; and a display direction of the first window is the first direction; and
when detecting that the screen direction of the electronic device changes from the first direction to a second direction, keeping, by the electronic device, a display direction of the second window unchanged, and rotating the first window, so that the display direction of the first window is the second direction.

2. The display method according to claim 1, wherein the first window is a floating window.

3. The display method according to claim 1 or 2, wherein the second window is a full-screen window, or the second window and a third window displayed by the electronic device are displayed on split screens.

4. The display method according to any one of claims 1 to 3, wherein the rotating the first window comprises: rotating the first window when determining that the first window meets a preset condition.

5. The display method according to any one of claims 1 to 4, wherein the first window comprises a first control, the first control comprises a closed state and an open state, and the determining that the first window meets a preset condition comprises: determining that the first control is in the open state, wherein the open state indicates that the first window is displayed based on the screen direction of the electronic device.

6. The display method according to any one of claims 1 to 5, wherein the method further comprises: after rotating the first window, adjusting a size of the first window.

7. The display method according to any one of claims 1 to 6, wherein the first window and the second window are windows of different applications.

8. A window display method, applied to an electronic device and comprising:
displaying, by the electronic device, a first window, wherein a screen direction of the electronic device is a first direction; the screen direction is one of a portrait direction, a landscape direction, a reverse portrait direction, and a reverse landscape direction; and a display direction of the first window is the first direction; and
when opening a second window and displaying the second window in a preset display direction of the second window, keeping, by the electronic device, the display direction of the first window unchanged, wherein the preset display direction of the second window is different from the first direction, and the second window is a non-floating window.

9. The display method according to claim 8, wherein the second window is a full-screen window, or the second window is a split-screen window displayed on split screens with the first window and/or a third window.

10. The display method according to claim 8 or 9, wherein the first window is a floating window.

11. The display method according to any one of claims 8 to 10, wherein the keeping the display direction of the first window unchanged comprises: keeping the display direction of the first window unchanged when determining that the first window meets a preset condition.

12. The display method according to any one of claims 8 to 11, wherein the first window comprises a first control, the first control comprises a closed state and an open state, and the determining that the first window meets a preset condition comprises: determining that the first control is in the open state, wherein the open state indicates that the first window is displayed based on the screen direction of the electronic device.

13. The display method according to any one of claims 8 to 12, wherein the first window and the second window are windows of different applications.

14. An electronic device, comprising a processor and a storage device, wherein the storage device stores program instructions, and when the program instructions are run by the processor, the electronic device is enabled to perform the window display method according to any one of claims 1 to 7.

15. An electronic device, comprising a processor and a storage device, wherein the storage device stores program instructions, and when the program instructions are run by the processor, the electronic device is enabled to perform the window display method according to any one of claims 8 to 12.

16. A computer-readable storage medium, comprising computer instructions, wherein when the computer instructions are run on an electronic device, the electronic device is enabled to perform the window display method according to any one of claims 1 to 7.

17. A computer-readable storage medium, comprising computer instructions, wherein when the computer instructions are run on an electronic device, the electronic device is enabled to perform the window display method according to any one of claims 1 to 7.
